# EUROPEAN PATENT APPLICATION

(11) **EP 4 821 994 A1**
(43) Date of publication of application: **14.10.2026**
(21) Application number: 26164325.8
(22) Date of filing: 12.03.2026
(51) Int. Cl.: C09D 11/326, C09D 11/38, C09D 11/106, C09D 11/107

(54) **INKJET INK AND METHOD OF PRODUCING THE SAME**

(30) Priority: 07.04.2025 JP 2025063250
(71) Applicant: KYOCERA Document Solutions Inc., Osaka-shi, Osaka 540-8585 (JP)
(72) Inventor: WASHINO, Yusuke, Osaka-shi, Osaka, 540-8585 (JP); KOYAMA, Akinori, Osaka-shi, Osaka, 540-8585 (JP); IKETAKI, Kai, Osaka-shi, Osaka, 540-8585 (JP); HIDAKA, Tsubasa, Osaka-shi, Osaka, 540-8585 (JP)
(74) Representative: Viering, Jentschura & Partner mbB Patent- und Rechtsanwälte

(57) **Abstract**

An inkjet ink includes: an aqueous medium; and a pigment dispersion dispersed in the aqueous medium. The pigment dispersion includes a pigment and a specific resin. The specific resin includes a styrene derivative and a (meth)acrylic acid derivative and has a cross-linked structure with a cross-linking rate of 25% or more and 80% or less in which a pigment dispersion resin having an acid value of 150 mg KOH/g or more and less than 200 mg KOH/g is cross-linked by a cross-linking agent with a glycerol backbone. The aqueous medium includes at least one of a polyethylene glycol or trimethylolpropane. A content of the at least one of a polyethylene glycol or trimethylolpropane is 10 mass% or more.

## Description

### Field

The present disclosure relates to an inkjet ink and a method of producing the same.

### Background

An inkjet ink in which a pigment dispersion resin is cross-linked on the surface of a pigment has been known. In such an inkjet ink, the separation of the pigment dispersion resin from the surface of the pigment is suppressed, thereby preventing deterioration of dispersion stability and redispersibility of the pigment. Further, an inkjet ink in which agglomeration of pigments is reduced by adding a large amount of glycerin to suppress drying has also been disclosed.

### Summary

An inkjet ink according to an embodiment of the present disclosure includes: an aqueous medium; and a pigment dispersion dispersed in the aqueous medium.

The pigment dispersion includes a pigment and a specific resin.

The specific resin includes a styrene derivative and a (meth)acrylic acid derivative, and has a cross-linked structure with a cross-linking rate of 25% or more and 80% or less in which a pigment dispersion resin having an acid value of 150 mg KOH/g or more and less than 200 mg KOH/g is cross-linked by a cross-linking agent with a glycerol backbone.

The aqueous medium includes at least one of a polyethylene glycol or trimethylolpropane.

A content of the at least one of a polyethylene glycol or trimethylolpropane is 10 mass% or more.

A method of producing an inkjet ink according to an embodiment of the present disclosure includes: a cross-linking step; and an ink preparation step.

The cross-linking step includes subjecting a pigment dispersion liquid including a cross-linking agent and a pigment dispersion that includes a pigment and a pigment dispersion resin adsorbed on a surface of the pigment to cross-linking treatment to cross-link the pigment dispersion resin adsorbed on the surface of the pigment such that a cross-linking rate is 25% or more and 80% or less.

The ink preparation step includes preparing an inkjet ink by adding a water-soluble additive and water to the pigment dispersion liquid after the cross-linking step.

The pigment dispersion resin includes a styrene derivative and a (meth)acrylic acid derivative.

The pigment dispersion resin has an acid value of 150 mg KOH/g or more and less than 200 mg KOH/g.

The cross-linking agent includes a glycerol backbone.

The water-soluble additive includes at least one of a polyethylene glycol or trimethylolpropane.

A content of the at least one of a polyethylene glycol or trimethylolpropane in the inkjet ink is 10 mass% or more.

According to the present disclosure, it is possible to improve the redispersibility of pigments in the inkjet ink.

### Detailed Description

Inkjet inks are desired to have higher redispersibility of pigments. Meanwhile, in inkjet inks, cross-linking the pigment dispersion resin itself does not improve dispersion stability and redispersibility of pigments. Further, in inkjet inks, excessively high viscosity impairs their functionality, limiting the reduction of agglomeration of pigments by the addition of glycerin having the effect of increasing viscosity.

In view of the circumstances as described above, it is an object of the present disclosure to improve the redispersibility of pigments in the inkjet ink.

An embodiment of the present disclosure will be described. Note that in the present disclosure, "acrylic" and "methacrylic" will be collectively referred to as "(meth)acrylic", i.e., "(meth)acrylic" includes both "acrylic" and "methacrylic".

### [Configuration of inkjet ink]

### (Schematic configuration)

An inkjet ink according to an embodiment of the present disclosure (hereinafter, also referred to simply as an "ink") includes an aqueous medium, and a pigment dispersion dispersed in the aqueous medium. The pigment dispersion includes a pigment a and a specific resin coating the pigment a. The ink according to this embodiment is a water-based ink that is ejected onto a recording medium from a recording head of an inkjet recording apparatus to form an image on the recording medium.

Examples of the recording medium on which an image is formed with the ink according to this embodiment include a permeable recording medium and a non-permeable recording medium. The ink according to this embodiment is suitable for forming an image on a permeable recording medium having excellent permeability of inks. Examples of the permeable recording medium include printing paper and a medium using a fiber as a raw material (e.g., a fabric). Examples of the printing paper include plain paper, copy paper, recycled paper, thin paper, thick paper, and glossy paper.

In the ink according to this embodiment, the specific resin has a cross-linked structure in which a pigment dispersion resin b having the effect of suppressing agglomeration of pigments in the aqueous medium by being adsorbed on the surface of the pigment a is cross-linked by a cross-linking agent c. In the ink according to this embodiment, since the specific resin coating the pigment a has a cross-linked structure, the specific resin is bound to the surface of the pigment a, thereby preventing the specific resin from separating from the surface of the pigment a. In the ink according to this embodiment, a strong binding force of the specific resin to the surface of the pigment a can be achieved while maintaining the effect of suppressing the agglomeration of the pigments a by the pigment dispersion resin b, making it easier to maintain the dispersibility of the pigment dispersion. For this reason, in the ink according to this embodiment, high redispersibility of the pigment dispersion can be achieved. In the ink according to this embodiment, the pigment dispersion resin b is a copolymer that includes a styrene derivative and a (meth)acrylic acid derivative. Further, in the ink according to this embodiment, the cross-linking agent c includes a glycerol backbone. In this embodiment, the glycerol backbone refers to a structural unit derived from glycerol (HOCH₂-CHOH-CH₂OH), and the hydrogen atom of a hydroxyl group in glycerol may be substituted with another functional group (e.g., an epoxy group or a glycidyl group). In the cross-linking agent c, a plurality of glycerol backbones may form a polyglycerol unit via an ether bond.

The aqueous medium of the ink according to this embodiment includes a water-soluble additive d. The water-soluble additive d includes at least one of a polyethylene glycol or trimethylolpropane. In the ink according to this embodiment, the at least one of a polyethylene glycol or trimethylolpropane has the effect of enhancing the redispersibility of the pigment dispersion including the specific resin cross-linked by the cross-linking agent c including a glycerol backbone. In the ink according to this embodiment, in order to achieve the above effect effectively, the content of the at least one of a polyethylene glycol or trimethylolpropane is 10 mass% or more. The water-soluble additive d favorably includes a polyethylene glycol, more favorably a polyethylene glycol whose boiling point is 250°C or more. A polyethylene glycol having an average molecular weight of approximately 200 or more corresponds to the polyethylene glycol whose boiling point is 250°C or more, and examples thereof include PEG300, PEG400, and PEG600.

### (Pigment a)

In the ink according to this embodiment, for example, a yellow pigment, an orange pigment, a red pigment, a blue pigment, a purple pigment, or a black pigment can be used as the pigment a. Examples of the yellow pigment include C.I. Pigment Yellow 74, 93, 95, 109, 110, 120, 128, 138, 139, 151, 154, 155, 173, 180, 185, or 193. Examples of the orange pigment include C.I. Pigment Orange 34, 36, 43, 61, 63, or 71. Examples of the red pigment include C.I. Pigment Red 122 or 202. Examples of the blue pigment include C.I. Pigment Blue 15 or 15:3. Examples of the purple pigment include C.I. Pigment Violet 19, 23, or 33. Examples of the black pigment include C.I. Pigment Black 7. In the ink according to this embodiment, the content of the pigment a is favorably 3 mass% or more and 20 mass% or less.

### (Pigment dispersion)

In the ink according to this embodiment, the pigment dispersion resin b is a fine particle of a copolymer that includes a styrene derivative and a (meth)acrylic acid derivative, and has the effect of suppressing the agglomeration of the pigments a by being adsorbed on the surface of the pigment a. Part of the pigment dispersion resin b may be dispersed in the aqueous medium without being adsorbed on the surface of the pigment a. The styrene derivative constituting the pigment dispersion resin b includes styrene, α-methylstyrene, β-methylstyrene, or the like. The (meth)acrylic acid derivative constituting the pigment dispersion resin b includes acrylic acid, methacrylic acid, or the like. The carboxy group of the (meth)acrylic acid derivative constituting the pigment dispersion resin b may be neutralized by a basic compound.

Examples of the basic compound used to neutralize the carboxy group of the (meth)acrylic acid derivative constituting the pigment dispersion resin b include an organic base and an inorganic base. Examples of the organic base include amines, pyridines, and imidazoles. Examples of the inorganic base include sodium hydroxide (NaOH) and potassium hydroxide (KOH). From the viewpoint of cost, it is advantageous to use an inorganic base as a basic compound. Meanwhile, using an inorganic base as a basic compound tends to increase a pH after cross-linking treatment, making it difficult to increase the cross-linking strength and making it necessary to perform neutralization treatment after the cross-linking treatment. From such a viewpoint, it is favorable to use an organic base as a basic compound, and it is more favorable to use only an organic base.

The neutralization rate of the pigment dispersion resin b is favorably 20% or more and 100% or less. Note that the neutralization rate of the pigment dispersion resin b is obtained as the percentage (100 × (MB / MA)) of a usage amount MB to a theoretical value MA, MA indicating the theoretical value of the amount of the basic compound necessary for completely neutralizing the pigment dispersion resin b, MB indicating the actual usage amount of the basic compound in the dispersion step.

The acid value of the pigment dispersion resin b is 150 mg KOH/g or more and less than 200 mg KOH/g. By setting the acid value of the pigment dispersion resin b to 150 mg KOH/g or more, favorable cross-linking by the cross-linking agent c is possible. By setting the acid value of the pigment dispersion resin b to less than 200 mg KOH/g, high redispersibility of pigments can be achieved in the ink according to this embodiment. Note that the acid value of the pigment dispersion resin b is obtained by measurement according to JIS K 0070:1992 (Test methods for acid value, saponification value, ester value, iodine value, hydroxyl value and unsaponifiable matter of chemical products).

In the ink according to this embodiment, as described above, a specific resin having a cross-linked structure in which the pigment dispersion resin b is cross-linked by the cross-linking agent c is formed, i.e., the pigment dispersion includes the pigment a and the specific resin. The specific resin has a structure derived from the pigment dispersion resin b and a structure derived from the cross-linking agent c. In the ink according to this embodiment, the cross-linking rate of the specific resin is 25% or more and 80% or less, favorably 40% or more and 70% or less. In the ink according to this embodiment, by keeping the cross-linking rate of the specific resin at 80% or less, high redispersibility of the pigment dispersion can be achieved. Further, in the ink according to this embodiment, by setting the cross-linking rate of the specific resin to 25% or more, the effect of suppressing separation of the specific resin from the surface of the pigment a is favorably achieved.

The cross-linking rate refers to the percentage of the number of moles of repeating units having a cross-linked structure when the total number of moles of repeating units derived from the monomer having a functional group that reacts with the cross-linking agent in the specific resin is 100%. The cross-linking rate of the specific resin according to this embodiment is defined by an apparent cross-linking rate calculated from the equivalent number of moles of carboxy groups of the specific resin and the equivalent number of moles of cross-linked functional groups of the cross-linking agent and is calculated using the following formula. 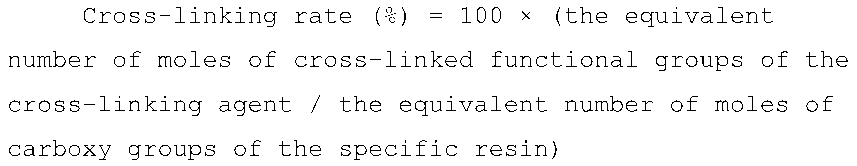 Cross-linking rate (%) = 100 × (the equivalent number of moles of cross-linked functional groups of the cross-linking agent / the equivalent number of moles of carboxy groups of the specific resin)

In this embodiment, the cross-linking agent c used for cross-linking the pigment dispersion resin b is favorably a cross-linking agent having an epoxy group that reacts with the carboxy group of the pigment dispersion resin b. The cross-linking agent c favorably has three or more epoxy groups in one molecule. Further, the cross-linking agent c favorably includes four or more glycerol backbones in one molecule. The cross-linking agent c is favorably water-soluble, and the water solubility of the cross-linking agent c is favorably 80% or more, more favorably 100%. Note that the water solubility is calculated from the amount of the epoxy compound dissolved when 10 g of an epoxy compound was added to 90 g of water. In the ink according to this embodiment, for example, polyglycerol polyglycidylether or diglycerol polyglycidylether can be used as the cross-linking agent c.

In the ink according to this embodiment, the content of the pigment dispersion is favorably 5 mass% or more and 30 mass% or less. In the ink according to this embodiment, by setting the content of the pigment dispersion to 5 mass% or more, an image with favorable image density is more likely to be formed on a recording medium. Further, in the ink according to this embodiment, by keeping the content of the pigment dispersion at 30 mass% or less, fluidity sufficient as an ink is more likely to be ensured. In the ink according to this embodiment, the content of the specific resin is favorably 0.5 mass% or more and 10 mass% or less. In the pigment dispersion, the content of the specific resin is favorably 10 mass% or more and 50 mass% or less. Further, in the pigment dispersion, the total content of the pigment a and the specific resin is favorably 90 mass% or more.

### (Water)

In the ink according to this embodiment, for example, ion exchanged water, purified water, or distilled water can be used as water constituting the aqueous medium. In the ink according to this embodiment, the content of water is favorably 25 mass% or more and 80 mass% or less from the viewpoints of dryness and ejection reliability.

### (Other components)

In the ink according to this embodiment, components other than the above may be blended as necessary. The surfactant is capable of optimizing the permeability (wettability) of the ink according to the present disclosure on a recording medium. Examples of the surfactant that can be used in the ink according to this embodiment include an anionic surfactant, a cationic surfactant, and a nonionic surfactant. As the surfactant, a nonionic surfactant is favorable. Examples of the nonionic surfactant include polyoxyethylene dodecylether, polyoxyethylene hexadecylether, polyoxyethylene nonylphenylether, polyoxyethylene sorbitan monooleate ether, monodecanoyl sucrose, and an ethylene oxide adduct of acetylene glycol. As the nonionic surfactant, an ethylene oxide adduct of acetylene glycol is favorable.

Further, in addition to the surfactant, various additives such as a dispersing aid, a dissolution stabilizer, an antioxidant, a viscosity adjustor, a pH adjuster, and an antifungal agent may be added to the ink according to this embodiment, as necessary.

### [Method of producing inkjet ink]

### (Introduction)

An example of the method of producing the ink according to this embodiment will be described. The method of producing the ink according to this embodiment includes a dispersion step, a cross-linking step, a centrifuging step, and an ink preparation step. Note that in the method of producing the ink according to this embodiment, the centrifuging step may be omitted. Each step of the method of producing the ink according to this embodiment will be described below.

### (Dispersion step)

In the dispersion step, a pigment dispersion liquid in the preceding stage of cross-linking the pigment dispersion resin b is prepared by performing dispersion treatment for dispersing the pigment a and the pigment dispersion resin b in water. In the pigment dispersion liquid at this stage, the pigment dispersion including the pigment a and the pigment dispersion resin b adsorbed on the surface of the pigment a is dispersed in water. Examples of the dispersing apparatus to be used for dispersion include a wet dispersing apparatus such as a media disperser. It is favorable to subject the pigment dispersion resin b to be used in the dispersion step to neutralization treatment with a basic compound (e.g., KOH or NaON) in advance such that a predetermined neutralization rate is achieved. In the dispersion step, an antifoaming agent may be blended in the pigment dispersion liquid. In the dispersion step, it is favorable to remove coarse particles from the pigment dispersion liquid by filtration using a filter (e.g., a pore size of 5 µm).

### (Cross-linking step)

In the cross-linking step, the cross-linking agent c is added to the pigment dispersion liquid obtained in the dispersion step to subject the pigment dispersion liquid in which the cross-linking agent c is dispersed to cross-linking treatment. This causes the carboxy group of the pigment dispersion resin b adsorbed on the surface of the pigment a and the epoxy group of the cross-linking agent c to react with each other, thereby cross-linking the pigment dispersion resin b on the surface of the pigment a. In the cross-linking step, it is favorable to stir, after adding the cross-linking agent c to the pigment dispersion liquid, the pigment dispersion liquid while heating it. The conditions (temperature, time, etc.) of the cross-linking treatment can be set in accordance with the target cross-linking rate of the specific resin after cross-linking of the pigment dispersion resin b, and the like. The heating temperature can be, for example, 50°C or more and 95°C or less. The heating time can be, for example, 30 minutes or more and 8 hours or less.

### (Centrifuging step)

In the centrifuging step, the pigment dispersion liquid after the cross-linking step is subjected to centrifugal treatment, and the supernatant liquid of the pigment dispersion liquid after the centrifugal treatment is replaced with water. As a result, in the centrifuging step, the components that have been free in water in the pigment dispersion liquid can be removed. The centrifugal treatment conditions in the centrifuging step can be, for example, a rotational speed of 10,000 rpm or more and 100,000 rpm or less and a centrifugal treatment time of 12 hours or more and 48 hours or less.

### (Ink preparation step)

In the ink preparation step, the water-soluble additive d and water are added to the pigment dispersion liquid after the centrifuging step. In this way, the ink according to this embodiment is obtained. Note that in the ink preparation step, as necessary, components other than the water-soluble additive d and water (specifically, at least one of a surfactant, a dissolution stabilizer, a penetrating agent, or a viscosity adjustor) may be further added. In the ink preparation step, it is favorable to stir the obtained ink with a stirrer. Further, in the ink preparation step, foreign substances and coarse particles may be removed from the obtained ink using a filter (e.g., a filter having a pore size of 5 µm or less).

### [Examples and Comparative Examples]

As Examples and Comparative Examples of the present disclosure, inks were prepared and evaluated. Note that the following Examples are merely examples of the present disclosure, and the configuration of the present disclosure is not limited to those in Examples.

### (Preparation of ink)

Inks according to Examples and Comparative Examples were prepared in accordance with the above production method. In all of Examples and Comparative Examples, carbon black "MONARCH 800" manufactured by CABOT was used as a pigment. As pigment dispersion resins, a pigment dispersion resin b1 formed of a styrene-(meth)acrylic acid copolymer having an acid value of 152 mg KOH/g, a pigment dispersion resin b2 formed of a styrene-(meth)acrylic acid copolymer having an acid value of 199 mg KOH/g, and a pigment dispersion resin b3 formed of a styrene-(meth)acrylic acid copolymer having an acid value of 329 mg KOH/g were prepared.

As cross-linking agents, the following cross-linking agents c1 and c2 were prepared. The cross-linking agent c1 is polyglycerol polyglycidylether including four glycerol backbones. The cross-linking agent c2 is polyethylene glycol diglycidylether that includes no glycerol backbone.
Cross-linking agent c1: DENACOL (registered trademark) EX-512 (manufactured by Nagase ChemteX Corporation)
Cross-linking agent c2: DENACOL (registered trademark) EX-830 (manufactured by Nagase ChemteX Corporation)

As water-soluble additives, the following water-soluble additives d1 tod4 were prepared.
Water-soluble additive d1: PEG600
Water-soluble additive d2: PEG400
Water-soluble additive d3: PEG300
Water-soluble additive d4: trimethylolpropane
Water-soluble additive d5: 1,2-propanediol

First, a mixture of 15 mass% of a pigment, 5 mass% of a pigment dispersion resin, 1 mass% of 1,2-pentanediol, and 79 mass% of water was subjected to dispersion treatment using a bead mill ("Rocking shaker RS-05W-CV" manufactured by SEIWA GIKEN Co., ltd.) to obtain a pigment dispersion liquid. 1,2-pentanediol was blended as a dispersing aid. In the dispersion treatment, 180 g of beads were used per 60 g of the mixture. The dispersion treatment was terminated when the particle size of the pigment dispersion reached 85 to 95 nm.

Next, water and a cross-linking agent were added to the pigment dispersion liquid to achieve the solid content concentration of 14.3 mass%. Cross-linking treatment was performed by stirring the pigment dispersion liquid to which water and the cross-linking agent were added while heating it. The conditions (temperature, time, etc.) of the cross-linking treatment for the pigment dispersion liquid were varied to achieve a predetermined cross-linking rate of the specific resin.

Then, a water-soluble additive, a surfactant, and water were added to the pigment dispersion liquid to obtain an ink. As the surfactant, SURFYNOL 440 (Nissin Chemical Co., Ltd.) was used. In all of the inks, the content of the pigment was set to 8 mass% and the content of the surfactant was set to 1 mass%. Further, in each ink, the content of the water-soluble additive was set to 10 mass% or 5 mass%.

### (Evaluation of ink)

For the inks according to Examples and Comparative Examples, redispersibility was evaluated. In the evaluation of redispersibility, each ink was applied onto a SUS substrate by spin coating and allowed to stand. For each ink, the applied coating film of each ink dried on the SUS substrate was immersed in ion exchanged water for 1 minute at the timing of 2 days and 4 days after the application, and the behavior of the pigment dispersion when the applied coating film was dissolved was visually observed. The redispersibility of each ink was evaluated in accordance with the following criteria A, B, and C. Inks with the evaluation of A or B for redispersibility are evaluated to "Pass", and inks with the evaluation of C are evaluated to "Fail".
A: redispersed after 4 days
B: redispersed after 2 days, but did not redisperse after 4 days
C: did not redisperse after 2 days

### (Examples 1 to 10)

Table 1 shows the acid value of the pigment dispersion resin, the type of cross-linking agent, the type and content of water-soluble additive, the cross-linking rate of the specific resin, and the evaluation result of redispersibility for each of the inks according to Examples 1 to 10. All of the inks according to Examples 1 to 10 have the configuration according to the above embodiment. In all of the inks according to Examples 1 to 10, the redispersibility was evaluated to "Pass". Further, focusing on Examples 1, 3, 5, and 7, a better evaluation result was obtained in Examples 1, 3, and 5 in which a polyethylene glycol was used as a water-soluble additive than Example 7 in which trimethylolpropane was used as a water-soluble additive. Further, focusing on Examples 2, 9, and 10, a better evaluation result was obtained in Examples 2 and 10 in which the cross-linking rate of the specific resin was 40% or more and 70% or less than Example 9 in which the cross-linking rate of the specific resin was less than 40%.

**(Table 1)**

| | | Dispersion resin | Cross-linking agent | Additive | | Cross-linking rate (%) | Evaluation result |
|---|---|---|---|---|---|---|---|
| | | Acid value (mg KOH/g) | Type | Type | Content (mass%) | | Redispersibility |
| | 1 | 152 | c1 | d1 | 10 | 60 | A |
| | 2 | 199 | c1 | d1 | 10 | 60 | A |
| | 3 | 152 | c1 | d2 | 10 | 60 | A |
| | 4 | 199 | c1 | d2 | 10 | 60 | A |
| Example | 5 | 152 | c1 | d3 | 10 | 60 | A |
| | 6 | 199 | c1 | d3 | 10 | 60 | A |
| | 7 | 152 | c1 | d4 | 10 | 60 | B |
| | 8 | 199 | c1 | d4 | 10 | 60 | A |
| | 9 | 199 | c1 | d1 | 10 | 30 | B |
| | 10 | 199 | c1 | d1 | 10 | 70 | A |

### (Comparative Examples 1 to 4)

Table 2 shows the acid value of the pigment dispersion resin, the type of cross-linking agent, the type and content of water-soluble additive, the cross-linking rate of the specific resin, and the evaluation result of redispersibility for each of the inks according to Comparative Examples 1 to 4. All of the inks according to Comparative Examples 1 to 4 are different from the inks according to Examples 1 to 10 in that the acid value of the pigment dispersion resin is 200 mg KOH/g or more. In all of the inks according to Comparative Examples 1 to 4, the redispersibility was evaluated to "Fail".

**(Table 2)**

| | | Dispersion resin | Cross-linking agent | Additive | | Cross-linking rate (%) | Evaluation result |
|---|---|---|---|---|---|---|---|
| | | Acid value (mg KOH/g) | Type | Type | Content (mass%) | | Redispersibility |
| | 1 | 329 | c1 | d1 | 10 | 60 | C |
| Comparative Example | 2 | 329 | c1 | d2 | 10 | 60 | C |
| | 3 | 329 | c1 | d3 | 10 | 60 | C |
| | 4 | 329 | c1 | d4 | 10 | 60 | C |

### (Comparative Examples 5 to 12)

Table 3 shows the acid value of the pigment dispersion resin, the type of cross-linking agent, the type and content of water-soluble additive, the cross-linking rate of the specific resin, and the evaluation result of redispersibility for each of the inks according to Comparative Examples 5 to 12. All of the inks according to Comparative Examples 5 to 12 are different from the inks according to Examples 1 to 10 in that the cross-linking agent c2 that includes no glycerol backbone is used. In all of the inks according to Comparative Examples 5 to 12, the redispersibility was evaluated to "Fail".

**(Table 3)**

| | | Dispersion resin | Cross-linking agent | Additive | | Cross-linking rate (%) | Evaluation result |
|---|---|---|---|---|---|---|---|
| | | Acid value (mg KOH/g) | Type | Type | Content (mass%) | | Redispersibility |
| | 5 | 152 | c2 | d1 | 10 | 60 | C |
| | 6 | 199 | c2 | d1 | 10 | 60 | C |
| | 7 | 152 | c2 | d2 | 10 | 60 | C |
| Comparative Example | 8 | 199 | c2 | d2 | 10 | 60 | C |
| | 9 | 152 | c2 | d3 | 10 | 60 | C |
| | 10 | 199 | c2 | d3 | 10 | 60 | C |
| | 11 | 152 | c2 | d4 | 10 | 60 | C |
| | 12 | 199 | c2 | d4 | 10 | 60 | C |

### (Comparative Examples 13 to 20)

Table 4 shows the acid value of the pigment dispersion resin, the type of cross-linking agent, the type and content of water-soluble additive, the cross-linking rate of the specific resin, and the evaluation result of redispersibility for each of the inks according to Comparative Examples 13 to 20. All of the inks according to Comparative Examples 13 to 20 are different from the inks according to Examples 1 to 10 in that the content of the water-soluble additive is less than 10 mass%. In all of the inks according to Comparative Examples 13 to 20, the redispersibility was evaluated to "Fail".

**(Table 4)**

| | | Dispersion resin | Cross-linking agent | Additive | | Cross-linking rate (%) | Evaluation result |
|---|---|---|---|---|---|---|---|
| | | Acid value (mg KOH/g) | Type | Type | Content (mass%) | | Redispersibility |
| | 13 | 152 | c1 | d1 | 5 | 60 | C |
| | 14 | 199 | c1 | d1 | 5 | 60 | C |
| | 15 | 152 | c1 | d2 | 5 | 60 | C |
| Comparative Example | 16 | 199 | c1 | d2 | 5 | 60 | C |
| | 17 | 152 | c1 | d3 | 5 | 60 | C |
| | 18 | 199 | c1 | d3 | 5 | 60 | C |
| | 19 | 152 | c1 | d4 | 5 | 60 | C |
| | 20 | 199 | c1 | d4 | 5 | 60 | C |

### (Comparative Examples 21 and 22)

Table 5 shows the acid value of the pigment dispersion resin, the type of cross-linking agent, the type and content of water-soluble additive, the cross-linking rate of the specific resin, and the evaluation result of redispersibility for each of the inks according to Comparative Examples 21 and 22. All of the inks according to Comparative Examples 21 and 22 are different from the inks according to Examples 1 to 10 in that 1,2-propanediol is used as a water-soluble additive. In all of the inks according to Comparative Examples 21 and 22, the redispersibility was evaluated to "Fail".

**(Table 5)**

| | | Dispersion resin | Cross-linking agent | Additive | | Cross-linking rate (%) | Evaluation result |
|---|---|---|---|---|---|---|---|
| | | Acid value (mg KOH/g) | Type | Type | Content (mass%) | | Redispersibility |
| Comparative Example | 21 | 152 | c1 | d5 | 10 | 60 | C |
| | 22 | 199 | c1 | d5 | 10 | 60 | C |

### (Comparative Examples 23 and 24)

Table 6 shows the acid value of the pigment dispersion resin, the type of cross-linking agent, the type and content of water-soluble additive, the cross-linking rate of the specific resin, and the evaluation result of redispersibility for each of the inks according to Comparative Examples 23 and 24. The ink according to Comparative Example 23 is different from the inks according to Examples 1 to 10 in that the cross-linking rate of the specific resin is less than 25%. The ink according to Comparative Example 24 is different from the inks according to Examples 1 to 10 in that the cross-linking rate of the specific resin exceeds 80%. In all of the inks according to Comparative Examples 23 and 24, the redispersibility was evaluated to "Fail".

**(Table 6)**

| | | Dispersion resin | Cross-linking agent | Additive | | Cross-linking rate (%) | Evaluation result |
|---|---|---|---|---|---|---|---|
| | | Acid value (mg KOH/g) | Type | Type | Content (mass%) | | Redispersibility |
| Comparative Example | 23 | 199 | c1 | d1 | 10 | 10 | C |
| | 24 | 199 | c1 | d1 | 10 | 90 | C |

## Claims

1. An inkjet ink, comprising:
an aqueous medium; and
a pigment dispersion dispersed in the aqueous medium,
the pigment dispersion including a pigment and a specific resin,
the specific resin including a styrene derivative and a (meth)acrylic acid derivative and having a cross-linked structure with a cross-linking rate of 25% or more and 80% or less in which a pigment dispersion resin having an acid value of 150 mg KOH/g or more and less than 200 mg KOH/g is cross-linked by a cross-linking agent with a glycerol backbone,
the aqueous medium including at least one of a polyethylene glycol or trimethylolpropane,
a content of the at least one of a polyethylene glycol or trimethylolpropane being 10 mass% or more.

2. The inkjet ink according to claim 1, wherein
the cross-linking agent has three or more epoxy groups in one molecule.

3. The inkjet ink according to claim 1, wherein
the cross-linking agent includes four or more glycerol backbones in one molecule.

4. The inkjet ink according to claim 1, wherein
the aqueous medium includes a polyethylene glycol whose boiling point is 250°C or more.

5. A method of producing an inkjet ink, comprising:
a cross-linking step of subjecting a pigment dispersion liquid including a cross-linking agent and a pigment dispersion that includes a pigment and a pigment dispersion resin adsorbed on a surface of the pigment to cross-linking treatment to cross-link the pigment dispersion resin adsorbed on the surface of the pigment such that a cross-linking rate is 25% or more and 80% or less; and
an ink preparation step of preparing an inkjet ink by adding a water-soluble additive and water to the pigment dispersion liquid after the cross-linking step,
the pigment dispersion resin including a styrene derivative and a (meth)acrylic acid derivative,
the pigment dispersion resin having an acid value of 150 mg KOH/g or more and less than 200 mg KOH/g,
the cross-linking agent including a glycerol backbone,
the water-soluble additive including at least one of a polyethylene glycol or trimethylolpropane,
a content of the at least one of a polyethylene glycol or trimethylolpropane in the inkjet ink being 10 mass% or more.
